# EUROPÄISCHE PATENTSCHRIFT

(11) **EP 1 395 386 B1**
(45) Veröffentlichungstag und Bekanntmachung des Hinweises auf die Patenterteilung: **09.02.2011**
(21) Anmeldenummer: 02737708.4
(22) Anmeldetag: 13.06.2002
(51) Int. Cl.: B23K 31/02, F01L 1/00, F16H 53/00

(54) **SCHWEISSTECHNISCH GEBAUTE NOCKENWELLE, VERFAHREN ZU IHRER HERSTELLUNG SOWIE DAZU BENÖTIGTE NOCKEN**
WELDED CAMSHAFT AND METHOD FOR PRODUCTION THEREOF AND THE REQUIRED CAMS
ARBRE A CAMES FABRIQUE SELON UNE TECHNIQUE DE SOUDAGE, SON PROCEDE DE PRODUCTION ET CAMES UTILISEES A CET EFFET

(30) Priorität: 13.06.2001 CH 107301
(43) Veröffentlichungstag der Anmeldung: 10.03.2004
(73) Patentinhaber: Merz, Karl, CH-5734 Reinach/AG (CH)
(72) Erfinder: Merz, Karl, CH-5734 Reinach/AG (CH)
(74) Vertreter: Bremi, Tobias Hans
(86) Internationale Anmeldenummer: PCT/CH2002/000319
(87) Internationale Veröffentlichungsnummer: WO 2002/100588

(56) Entgegenhaltungen:
- DE-A- 3 346 056
- DE-A- 4 123 577
- DE-A- 4 306 621
- GB-A- 2 133 104

## Beschreibung

### TECHNISCHES GEBIET

Die vorliegende Erfindung betrifft eine gebaute Nockenwelle nach dem Oberbegriff des Anspruchs 1.

Eine solche Nockenwelle ist in der DE 33 46 056 offenbart.

Die Erfindung betrifft auch Herstellungverfahren für eine solche Nockenwelle sowie die dazu benötigten Nocken.

### STAND DER TECHNIK

Gebaute Nockenwellen mit auf einer Welle schweisstechnisch befestigten Nocken sind im Stand der Technik bereits mehrfach beschrieben worden. Aus der US 4,983,797 A1 sowie der DE 34 33 595 A1 ist auch der Einsatz eines Lasers zur Herstellung der Schweissverbindung bekannt. Die genannten Dokumente gehen offenbar davon aus, dass das Schweissen keine grösseren Probleme bereitet, jedenfalls erwähnen sie solche Probleme nicht explizit.

In der Praxis hat sich jedoch gezeigt, dass das Schweissen wegen der für die Nocken zu verwendenden Materialien, in der Regel hochgekohlte härtbare Stähle, nicht ganz so einfach ist und dauerhafte, den Anforderungen in Verbrennungsmotoren genügende Verbindungen nicht ohne weiteres hergestellt werden können. Entsprechend konnten sich Schweissverbindungen bei gebauten Nockenwellen bisher auch nicht durchsetzen. Im Einsatz sind immer noch sehr teure, aus einem Stück schmiedetechnisch hergestelle Nockenwellen oder solche, bei denen einzelne Nocken formkraftschlüssig, wärmetechnisch und/oder durch Einsatz des Innenhochdruckverfahrens auf einer Welle fixiert sind.

Aus der DE 3743816 C2 ist eine Nocke für eine gebaute Nockenwelle bekannt, bei welcher in die Nockenspitze ein Hartmetall-Einsatz eingebettet ist, welcher mit dem übrigen Nockenmaterial verlötet ist und der im Bereich der Nockespitze höheren Flächenpressung besser standhält. Bezüglich der Befestigung der Nocken auf der Welle wird nichts ausgeführt.

### DARSTELLUNG DER ERFINDUNG

Aufgabe der vorliegenden Erfindung ist es, anzugeben, wie bei einer gebauten Nockenwelle der eingangs genannten Art eine den Dauerbelastungen in der Praxis genügende Schweissverbindung auf kostengünstige Weise erreicht werden kann.

Diese Aufgabe wird bezüglich der Nockenwelle erfindungsgemäss gelöst durch die im Patentanspruch 1 gekennzeichneten Massnahmen. Die erfindungsgemäss Lösung besteht demnach in der Verwendung von Nocken, welche aus mindestens zwei unterschiedlichen Materialien zusammengesetzt sind und für welche in mindestens einem von der Schweissung betroffenen Bereich jeweils ein zweiter niedergekohlter, mit dem Stahl der Welle gut verschweissbarer Stahl verwendet ist.

Die unterschiedlichen Materialien der Nocken können löt-, plattier-, formschluss-, kraftschluss-, formkraftschluss-, klebe-, niet, und/oder schweisstechnisch, insbesondere jedoch widerstandspress- und/oder reibschweisstechnisch, miteinander verbunden werden. Beim Widerstandspress- und oder Reibschweissen kann unter dem dabei aufgewendeten Druck insbesondere die Bildung von Mikro- und/oder Makrorissen vermieden werden.

Gemäss einer ersten bevorzugten Ausführungsform weisen die Nocken einen die Kipphebel-Ablauffläche umfassenden und aus dem hochgekohlten Stahl bestehenden Kern auf, welcher in axialer Richtung zwischen mindestens zwei ringförmigen und/oder ringabschnittsförmigen, mit der Welle verschweissten Elementen aus dem zweiten niedergekohlten Stahl angeordnet ist.

Umgekehrt könnten die Nocken einen mit der Welle verschweissten Kern aus dem zweiten niedergekohlten Stahl aufweisen, welcher in axialer Richtung zwischen zwei die Kipphebel-Ablauffläche umfassenden, aus dem hochgekohlten Stahl bestehenden ringförmigen Elementen angeordnet ist.

Gemäss einer anderen Ausführungsform könnten die Nocken auch mindestens zweischalig aufgebaut sein und eine die Kipphebel-Ablauffläche umfassende äussere Schale aus dem hochgekohlten Stahl sowie mindestens eine innere, mit der Welle verschweisste Schale aus dem zweiten niedergekohlten Stahl aufweisen.

Schliesslich sind auch noch Übergangsformen zwischen diesen Varianten möglich.

Bevorzugt sind das oder die Teile der Nocken aus dem zweiten, niedergekohlten Stahl vollumlaufend mit der Welle verschweisst. Hierdurch wird eine hohe Stabilität der Nocken erreicht.

In besonders wirtschaftlicher Weise lassen sich die die Kipphebel-Ablaufflächen bildenden oder umfassenden Teile der Nocken aus gebogenen Profilstreifen herstellen, wobei der oder die Profilstreifen zu Gewichts- und Materialersparnis vorzugsweise im Bereich der Nockenspitze jeweils von der Welle abstehen. Aufeinanderstossende Enden des oder der Profilstreifen können hierbei miteinander, insbesondere widerstandspressschweisstechnisch, verschweisst sein. Möglich wäre es aber auch, wenn die aufeinanderstossenden Enden lediglich über das oder die Teile der Nocken aus dem zweiten, niedergekohlten Stahl miteinander verbunden sind. Besonders dabei kann es von Vorteil sein, wenn die aufeinanderstossende Enden in Umfangsrichtung einander überlappend ausgebildet sind.

Gemäss einer weiteren Ausführungsform können die die Kipphebel-Ablaufflächen bildenden oder umfassenden Teile der Nocken auch einstückig ausgebildet sein und die Welle z.B. vollumfänglich bündig umschliessen.

Das Anbringen der Schweissung zur Befestigung der Nocken auf der Welle lässt sich dadurch erleichtern, dass in mindestens einem der von der Schweissung betroffenen Bereiche in dem oder den Teilen aus dem zweiten niedergekohlten Stahl angrenzend an die Welle ein Fussring vorgesehen und die Schweissung durch diesenFussring hindurch ausgeführt ist.

Der für die Welle verwendete erste, niedergekohlte Stahl und/oder der für die Nocken verwendete zweite niedergekohlte Stahl sollte einen Kohlenstoffgehalt von weniger als als 0.5 % aufweisen. Demgegenüber kann der für die Kipphebel-Ablauffläche der Nocken verwendete hochgekohlte Stahl, um gut und ausreichend härtbar zu sein, einen Kohlenstoffgehalt von mehr als 0.5 %, insbesondere jedoch von mehr als 0.75 % aufweisen.

In verfahrenstechnischer Hinsicht wird die oben genannte Aufgabe erfindungsgemäss durch wenigstens eines der Verfahren gemäss den Ansprüchen 15 - 19 gelöst.

Bei dem Verfahren gemäss Anspruch 15 werden die Kipphebel-Ablaufflächen der Nocken vor dem Fügen bereits auf ihre sogenannte Ansprungshärte (z.B. auf 64 HR_{c}++) gehärtet sowie zusätzlich ggf. angelassen. Hierdurch wird mit Vorteil eine thermische Belastung der gesamten Nockenwelle, die zu einem Wellenverzug führen könnte, vermieden.

Wegen des niedrigen Kohlenstoffgehalts des Materials der Nocken aus dem zweiten niedergekohlten Stahl und des niedergekohlten Stahls der Welle wird bei ihrem Verschweissen eine Aufhärtung im Bereich der Schweissnaht bzw. der sogenannten Wärmeeinflusszone vermieden. Dadurch kommt es auch nicht zur einer Aufweitung des Fügespaltes verbunden mit dem Auftreten von feinen Rissen. Gemäss Anspruch 16 kann das Verschweissen dadurch bei Umgebungstemperatur der miteinander zu verschweissenden Teile durchgeführt werden. Ein Vorwärmen der Wellen zur Vermeidung zu hoher Wärmespannungen ist nicht erforderlich. Auch ist eine nachträgliche Erwärmung der gefügten Nockenwellen zur Reduktion einer zu hohen Schweissnahthärte nicht erforderlich, wodurch schliesslich eine Veränderung der Härte der vorgängig gehärteten Kipphebel-Ablaufflächen der Nocken vermieden wird. Die Schweissung der Nocken ist auf die beschriebene Art prozesssicher ausführbar. Die Qualtiät der Schweissnaht muss nicht laufend überprüft werden.

Gemäss Anspruch 17 erfolgt die Schweissung zur Befestigung der Nocken auf der Welle lasertechnisch.

Wegen der guten Verschweissbarkeit des Materials der Nocken aus dem zweiten niedergekohlten Stahl mit dem niedergekohlten Stahl der Welle kann die Schweissung zur Befestigung der Nocken auf der Welle gemäss dem Verfahren von Anspruch 18 mit einer Schweissgeschwindigkeit von grösser als 2 m/s, inbesondere jedoch von grösser als 4 m/s, ausgeführt werden. Hierdurch lassen sich hohe Fertigungsgeschwindigkeiten erreichen und die bei Verwendung von Laserschweissvorrichtungen teuren Installationen optimal ausnutzen.

Gemäss Anspruch 19 werden bei der Herstellung einer Nockenwelle nach der Erfindung die Nocken vor ihrer Verschweissung mit der Welle auf der Welle dadurch vorfixiert, dass ihre mit der Welle zu verschweissenden Elemente aus dem zweiten niedergekohlten Stahl mit der Welle verstemmt werden. Dies lässt sich z.B. durch einfachen Zangendruck ausführen und erleichtert das nachfolgende Schweissen, bei welchem die Nocken auf der Welle nicht extra festgehalten werden müssen und die Welle mit den vorfixierten Nocken unter einem otsfesten Schweissstrahl hindruchgedreht werden können.

Gegenstand der Erfindung sind auch gemäss Anspruch 20 die einzelnen Nocken, wie sie sich in ihrem Aufbau aus den auf die Nockenwelle als Ganzes gerichteten Ansprüchen ergeben.

Ein genereller Vorteil der Erfindung ist darin zu sehen, dass das Nockenmaterial praktisch frei wählbar ist und zwar unabhängig von der Schweissverbindungstechnologie zwischen Nocken und Welle.

### KURZE ERLÄUTERUNG DER FIGUREN

Die Erfindung soll nachfolgend anhand von Ausführungsbeispielen im Zusammenhang mit der Zeichnung näher erläutert werden. Es zeigt:
- Fig. 1: unter a) eine erste Ausführungsform einer erfindungsgemäss Nocke in einer Stirnansicht und unter b) die gleiche Nocke im Schnitt (A-A);
- Fig. 2: unter a) in einem Längsschnitt einen Längsabschnitt einer erfindungsgemässen Nockenwelle mit einer Nocke gemäss Fig. 1 und unter b) einen Querschnitt (B-B) durch diese Nockenwelle;
- Fig. 3: in einer Art Ausschnittsvergrösserung von Fig. 2 a) eine spezielle Ausführungsform einer erfindungsgemässen Nocke mit Schweissfuss;
- Fig. 4: verschiedene Formen von Kernen für erfindungsgemäse Nocken;
- Fig. 5: eine geschlossene Hohlnocke unter a) in Ansicht und unter b) im Schnitt (C-C);
- Fig. 6: unter a) - f) weitere Ausführungsformen von Kernen für erfindungsgemässe Nocken; und
- Fig. 7: unter a) - g) jeweils im Schnitt sowie in Ausschnittsdarstellungen weitere Ausführungsformen von erfindungsgemässen Nocken.

### WEGE ZUR AUSFÜHRUNG DER ERFINDUNG

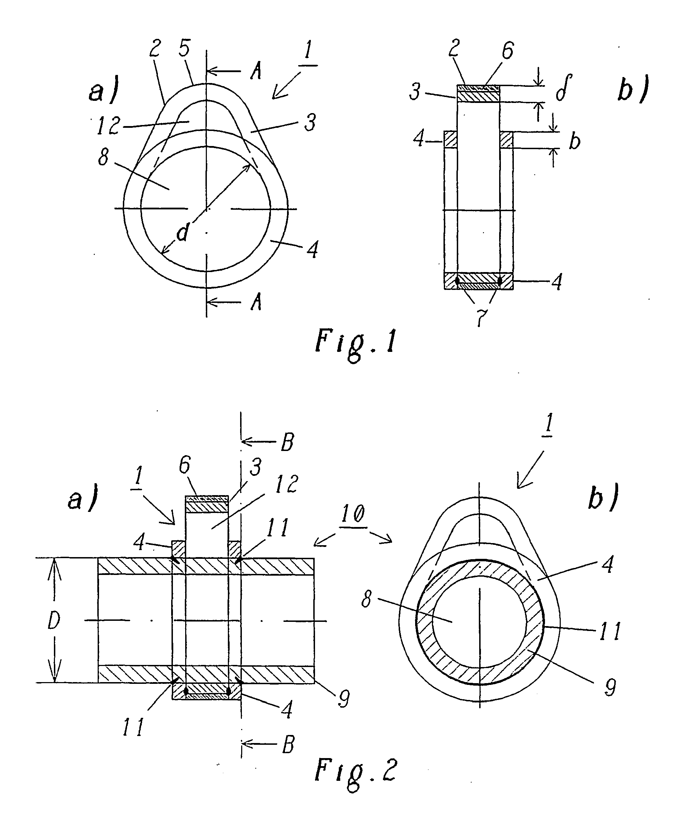

Die Nocke 1 von Fig. 1 weist einen eine Kipphebel-Ablauffläche 2 umfassenden und aus einem hochgekohlten Stahl bestehenden Kern 3 auf, welcher in axialer Richtung zwischen zwei kreisringförmigen Elementen 4 aus einem niedergekohlten Stahl angeordnet ist. Der Kern weist über seinen Umfang betrachtet eine im wesentlichen einheitliche und der Breite b der kreisringförmigen Elemente 4 entsprechende Dicke δ auf. Durch den Kern 3 ist eine Nockenerhebung bzw. Nockenspitze 5 ausgebildet. Entlang der Kipphebel-Ablauffläche 2 ist der Kern 3 gehärtet. Die entsprechende Oberflächen-Härtezone ist mit 6 bezeichnet.

Dort wo sie sich gegenseitig überlappen sind der Kern 3 und die beiden kreisringförmigen Elemente 4 durch eine unter Gegeneinanderpressen der Teile ausgeführte Widerstandsschweissung 7 miteinander verbunden. Durch diese Art der Verbindungstechnik können die beiden unterschiedlichen Stähle poren- und rissfrei miteinander verschweisst werden.

Fig. 2 zeigt die Nocke 1 von Fig. 1 mit ihrer Durchgangsöffnung 8 auf eine Welle 9 aus einem niedergekohlten Stahl aufgeschoben und mit der Welle 9 unter Ausbildung einer Nockenwelle 10 verschweist, wobei die Schweissung 11 jeweils vollumlaufend über 360° entlang der Nahtstelle zwischen den beiden kreisringförmigen Elemente 4 und der Welle 9 insbesondere laserschweisstechnisch ausgeführt ist. Indem sowohl die Welle 9 als auch die beiden kreisringförmigen Elemente 4 aus einem niedergekohlten Stahl bestehen, sind sie gut und selbst bei Umgebungstemperatur der Teile poren- und rissfrei miteinander verschweissbar.

Der unter anderem durch den Innendurchmesser der kreisringförmigen Elemente 4 bestimmte Durchmesser d der Durchgangsöffnung 8 der Nocke 1 entspricht dem Aussendurchmesser D der Welle 9, so das die Nocke 1 auf der Welle 9 im wesentlichen spaltfrei aufsitzt. Dies gilt auch für den Kern 3, soweit er nicht im Bereich der Nockenspitze 5 unter Ausbildung eines Hohlraumes 12 von der Welle 9 absteht.

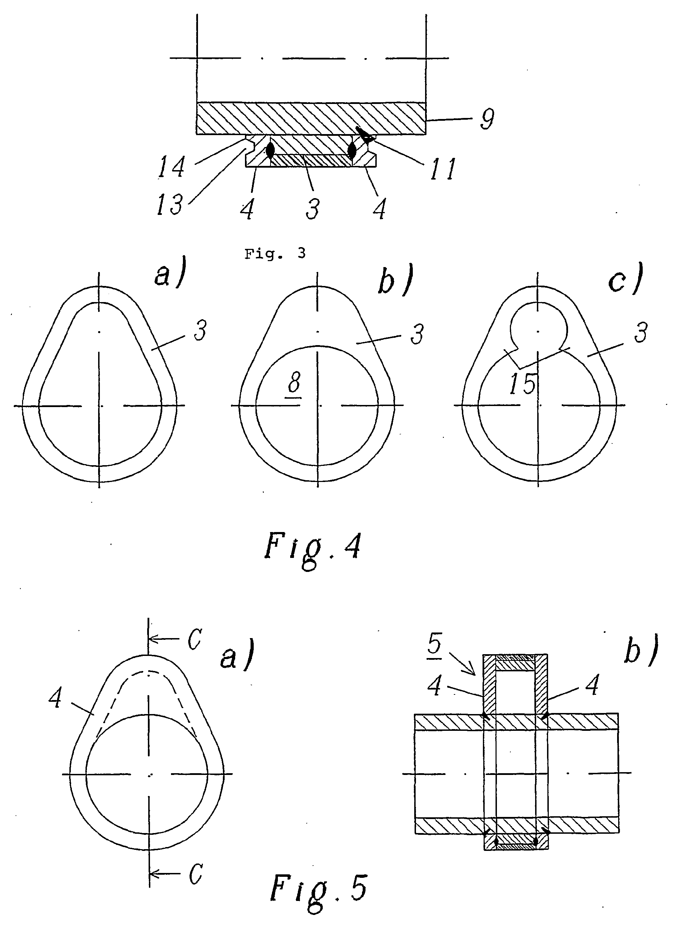

Fig. 3 zeigt in einer Art Ausschnittsvergrösserung von Fig 2 a) eine besondere Ausführungsform der beiden kreisringförmigen Elemente 4, wobei diese jeweils mit einer ringförmigen Nut 13 versehen sind. Durch die ringförmige Nut 13 entsteht eine Art Schweissfuss 14 durch welchen hindurch die Schweissung 11 im rechten Teil von Fig. 3 ausgeführt ist. Durch das Vorhandensein des Schweissfusses 14 ergibt sich ein vorteilhaft breiter Schweissquerschnitt zwischen den ringförmigen Elementen 4 und der Welle 9, welcher sehr stabil und hoch belastbar ist. Im linken Teil von Fig. 3 ist die Schweissung 11 weggelassen, um den Schweissfuss 14 besser sichtbar zu machen.

Bei der vorbeschriebenen Ausführungsform der Nocke 1 gemäss Fig. 1 weist der Kern 3 über seinen Umfang eine einheitliche Dicke δ auf, wodurch sich im Bereich der Nockenspitze 5 ein Abstand bzw. ein Hohlraum 12 zwischen dem Kern 3 und der Welle 9 ergibt. Fig. 4 zeigt unter a) den Kern 3 nochmals in dieser Ausbildung. Dies ist jedoch nur eine Möglichkeit, die dann besonders vorteilhaft ist, wenn der Kern, wie nachstehend noch ausführlicher beschrieben, aus einem Profilstreifen durch Biegen hergestellt wird. Der Kern 3 könnte jedoch genausogut im Bereich der Nockenspitze auch eine grössere Dicke aufweisen, so wie dies Fig. 4 z.B. unter b) zeigt, wo die die Durchgangsöffnung 8 kreiszylindrisch ist und ein Hohlraum 12 überhaupt vermieden wird. Man könnte hier auch von einer Vollkernnocke sprechen. Es versteht sich, dass die Ausführungsart von Fig. 4 b) gegenüber der von Fig. 4a) im Bereich der Nockenspitze 5 eine höhere Biegesteifigkeit aufweist. Demgegenüber zeichnet sich die Ausführungsart von Fig. 4 a) aber durch ein geringeres Nockengewicht, durch einen geringeren Materialverbrauch, durch eine geringere Unwucht bei Drehung sowie durch eine einfachere Herstellbarkeit aus. Fig. 4 c) zeigt eine Übergangsform zwischen den Ausführungsarten von Fig. 4 a) und 4 b). Dort ist der Kern 3 jeweils im Übergangsbereich zu einem Hohlraum 12 mit Verdickungen 15 versehen, die sich an die Wellenoberfläche anschmiegen und für die Nockenspitze 5 eine gewisse Versteifungswirkung haben. Eine vergleichbare Versteifung der Nockenspitze 5 bewirken andererseits aber auch die beiden ringförmigen Elemente 4, da diese ja vollumlaufend mit der Welle in Kontakt sind. Ggf. reicht diese zusätzliche Versteifungswirkung durch die ringförmigen Elemente 4 bereits aus, um in der Praxis den Kern 3 gemäss Fig. 4 a) ausführen zu können.

Eine die Steifigkeit der Nockenspitze 5 weiter erhöhende Massnahme könnte auch darin bestehen, die ringförmigen Elemente 4 anstelle von kreisringförmig bezüglich ihrer Form entsprechend der Querschnittsform des Vollkerns von Fig. 4 b) auszubilden und sie vollumlaufend mit einem Kern 3 gemäss Fig. 4 a) zu verbinden sowie wie dies Fig. 5 unter a) und b) zeigt. Auch die Nockenspitze 5 würde dann über die beiden so geformten, stanztechnisch ohne weiteres herstellbaren Elemente 4 auf der Welle abgestüzt und wäre zusätzlich in sich gegen Querkräfte stabilisiert.

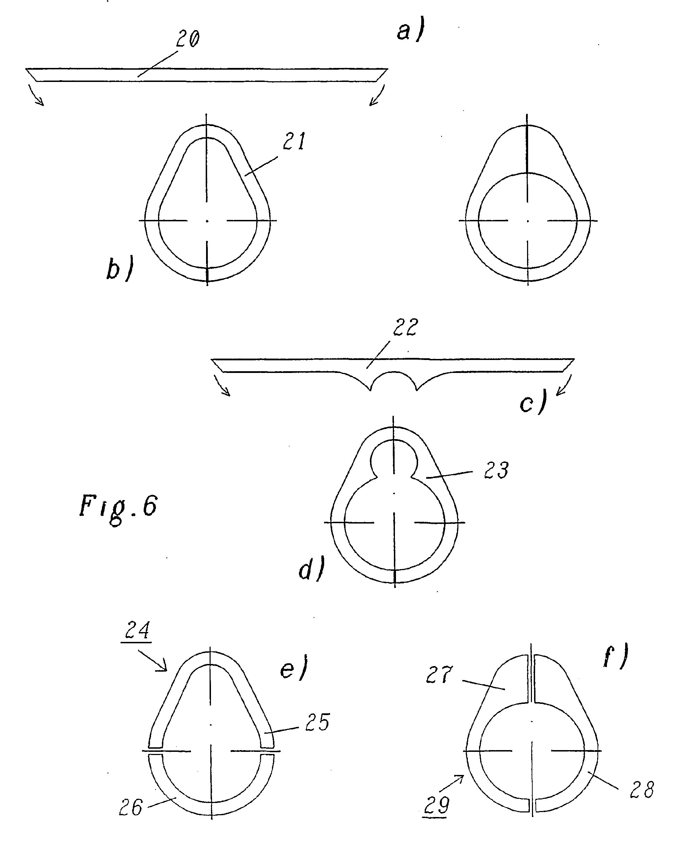

Wie bereits erwähnt, kann der Kern der vorbeschrieben Nocken 1 auf einfache Weise durch Biegen aus einem, jedoch auch aus mehreren Profilstreifen hergestellt werden, die z.B. von einem längeren Streifen abgelängt werden. Fig. 6 zeigt unter a) einen einfachen Profilstreifen 20 und unter b) den Kern 21 für eine Nocke 1, wie er durch Zusammenbiegen der beiden Enden des Profilstreifens 20 entsteht. Nachfolgend können die beiden Enden noch miteinander verbunden und der Kern 21 dadurch geschlossen werden. Hierzu eignet sich insbesondere wieder das Widerstandspressschweissen. Eine dabei allfällig entstehende Schweissraupe müsste kann nachträglich noch entfernt werden.

Unter c) zeigt Fig. 6 einen Profilstreifen 22 von nicht einheitlicher Dicke, aus welchem durch Zusammenbiegen seiner Enden der unter d) dargestellte Nockenkern 23 herstellbar ist und welcher dem von Fig. 4 c) entspricht.

Unter e) zeigt Fig. 6 einen Nockenkern 24, der aus zwei, jeweils zu Halbschalen 25, 26 gebogenen Profilstreifen zusammengesetzt ist. Die beiden Stossstellen der beiden Halbschalen 25, 26 können wieder miteinander verschweisst sein. Diese Ausführungsform hat den Vorteil, dass die Profilstreifen nicht so stark gebogen werden müssen und das Material dadurch weniger Belastungen ausgesetzt ist. Unter f) zeigt Fig. 6 wie aus zwei Halbschalen 27, 28 z.B. auch ein Vollkern 29 gemäss Fig. 4 b) herstellbar ist.

Bei allen Ausführungsformen von Fig. 6 könnten die Stossstellen entlang des Nockenumfangs auch an anderer Stelle angeordnet sein, inbesondere jeweils um 180° bzw. 90° versetzt, wie sich dies auch aus dem Vergleich der Figuren 6 e) und 6 f) ergibt.

Indem und sofern die Stossstellen der biegetechnisch hergestellen Nockenkerne gemäss Fig. 6 durch das beidseitige Hinzufügen der ringförmigen Elemente 4 überbrückt werden und somit ein Schliessen des Kerns dadurch sowieso erfolgt, kann ggf. auf ein vorgängiges Verbinden der Stossenden wie vorstehend beschrieben sogar verzichtet werden. Günstig wäre es in diesem Fall jedoch, die Stossenden des Kerns in Umfangsrichtung etwas einander überlappen zu lassen (z.B. Schrägschnitt). Umgekehrt wäre es möglich, anstelle geschlossener Ringelemente 4 lediglich Ringabschnitte zu verwenden und z.B. deren Stossstellen durch den Kern zu überbrücken.

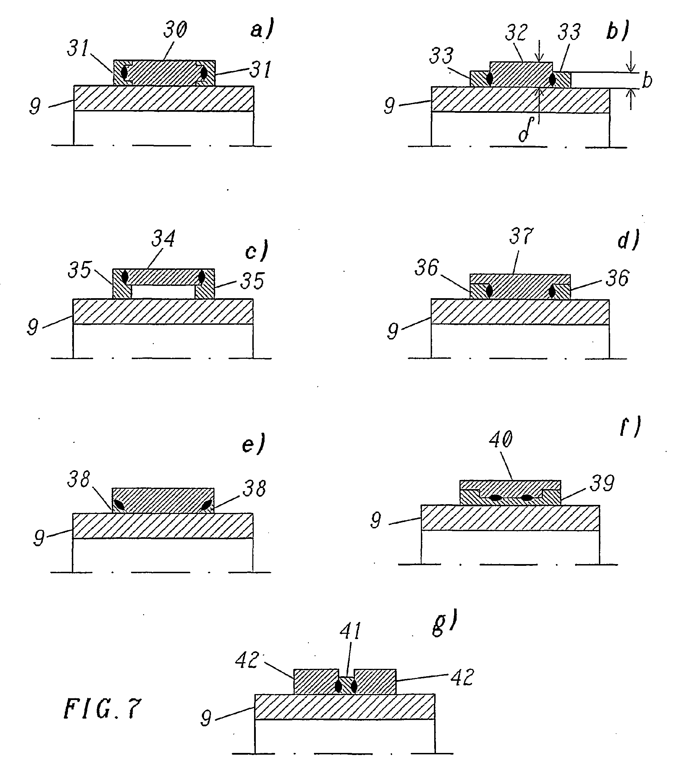

Fig. 7 zeigt unter a) - g) weitere Ausführungsformen von erfindungsgemässen Nocken.

Bei der Variante von Fig. 7 a) wird ein Kern 30 aus einem hochgekohlten Stahl von zwei beidseitig von ihm angeordneten, mit ihm formschlüssig sowie z.B. widerstandpressschweisstechnisch verbundenen, im Querschnitt c-fömigen Ringelementen 31 aus einem niedergekohlten Stahl flankiert. Bei der Variante von Fig. 7 b) ist die Breite b von zwei beidseitig eines Kerns 32 aus einem hochgekohlten Stahl angeordneten ringförmigen Elementen 33 aus einem niedergekohlten Stahl geringer gewählt als die Dicke δ des Kerns 32, so dass dieser radial nach aussen über die Elemente 33 übersteht. Bei der Variante von Fig. 7 c) sind die Verhältnisse bezüglich der Breiten b) bzw. Dicke δ umgekehrt. Auch überlappen sich hier der Kern 34 und die ringförmigen Elemente 35 jeweils in axialer Richtung. Bei der Variante von Fig. 7 d) sind der Fig. 7 b) entsprechende ringförmige Elemente 36 in seitliche Nuten eines Kerns 37 eingebettet bzw. der Kern 37 beiseitig nach aussen über die ringförmigen Elemente 36 bis zu deren Stirnseiten vorgezogen. Entsprechendes gilt für die Variante von Fig. 7 e), nur dass hier die ringförmigen Elemente 38im Querschnitt dreiecksförmig sind. Bei der Ausführungsform von Fig. 7 f) ist nur ein einzelnes, ringförmiges Element 39 aus einem niedergekohlten Stahl vorhanden, welches vollständig unterhalb eines Kerns 40 aus einem hochgekohlten Stahl angeordnet ist. Die Nocke ist erhält dadurch einen zweischaligen Aufbau. Bei der Ausführungsform von Fig. 7 g) sind schliesslich die Verhältnisse insofern umgekehrt, als dass hier beidseitig eines Kerns 41 aus einem niedergekohlten Stahl zwei aus einem hochgekohlten Stahl bestehende ringförmige Elemente 42 angeordnet sind. Die Verschweissung mit der Welle der Nockenwelle müsste hierbei z.B. durch den Kern 41 hindurch ausgeführt werden.

Bei allen vorbeschriebenen Ausführungsbeispielen könnten zur Verbindung der Teile aus dem hochgekohlten Stahl einerseits und dem niedergekohlten Stahl andererseits ausser dem erwähnten Widerstandspresschweissen auch andere Verbindungstechniken eingesetzt werden, darunter löt-, plattier-, formschluss-, kraftschluss-, formkraftschluss-, klebe-, niet, und/oder reibschweisstechnische Verfahren.

## Patentansprüche

1. Gebaute Nockenwelle mit mehreren auf einer Welle durch mindestens jeweils eine Schweissung befestigten Nocken, wobei die Welle aus einem ersten, niedergekohlten Stahl besteht und ein eine gehärtete oder härtbare Kipphebel-Ablauffläche aufweisender Bereich der Nocken aus einem hochgekohlten Stahl besteht, **dadurch gekennzeichnet, dass** die Nocken selbst aus zwei unterschiedlichen Materialien, nämlich dem hochgekohlten Stahl und einen zweiten niedergekohlten, mit dem Stahl der Welle gut verschweissbaren Stahl, zusammengesetzt sind, wobei der zweite niedergekohlte Stahl in mindestens einem von der Schweissung betroffenen Bereich verwendet ist.

2. Nockenwelle nach Anspruch 1, **dadurch gekennzeichnet, dass** die unterschiedlichen Materialien der Nocken löt-, plattier-, formschluss-, kraftschluss-, formkraftschluss-, klebe-, niet, und/oder schweisstechnisch, insbesondere widerstandspress- und/oder reibschweisstechnisch, miteinander verbunden sind.

3. Nockenwelle nach einem der Ansprüche 1 oder 2, **dadurch gekennzeichnet, dass** die Nocken einen die Kipphebel-Ablauffläche umfassenden und aus dem hochgekohlten Stahl bestehenden Kern aufweisen, welcher in axialer Richtung zwischen mindestens zwei ringförmigen und/oder ringabschnittsförmigen, mit der Welle verschweissten Elementen aus dem zweiten niedergekohlten Stahl angeordnet ist.

4. Nockenwelle nach einem der Ansprüche 1 - 3, **dadurch gekennzeichnet, dass** die Nocken mindestens zweischalig aufgebaut sind und eine die Kipphebel-Ablauffläche umfassende äussere Schale aus dem hochgekohlten Stahl sowie mindestens eine innere, mit der Welle verschweisste Schale aus dem zweiten niedergekohlten Stahl aufweist.

5. Nockenwelle nach einem der Ansprüche 1 oder 4, **dadurch gekennzeichnet, dass** die Nocken einen mit der Welle verschweissten Kern aus dem zweiten niedergekohlten Stahl aufweisen, welcher in axialer Richtung zwischen zwei die Kipphebel-Ablauffläche umfassenden aus dem hochgekohlten Stahl bestehenden ringförmigen Elementen angeordnet ist.

6. Nockenwelle nach einem der Ansprüche 1 - 5, **dadurch gekennzeichnet, dass** das oder die Teile der Nocken aus dem zweiten, niedergekohlten Stahl vollumlaufend mit der Welle verschweisst sind.

7. Nockenwelle nach einem der Ansprüche 1 - 6, **dadurch gekennzeichnet, dass** die die Kipphebel-Ablaufflächen bildenden oder umfassenden Teile der Nocken aus jeweils mindestens einem, gebogenen Profilstreifen hergestellt sind, wobei der oder die Profilstreifen vorzugsweise im Bereich der Nockenspitze jeweils von der Welle abstehen.

8. Nockenwelle nach Anspruch 7, **dadurch gekennzeichnet, dass** aufeinanderstossende Enden des oder der Profilstreifen miteinander, insbesondere widerstandspressschweisstechnisch, verschweisst sind.

9. Nockenwelle nach Anspruch 7, **dadurch gekennzeichnet, dass** aufeinanderstossende Enden des oder der Profilstreifen lediglich über das oder die Teile der Nocken aus dem zweiten, niedergekohlten Stahl miteinander verbunden sind.

10. Nockenwelle nach einem der Ansprüche 7 - 9, **dadurch gekennzeichnet, dass** aufeinanderstossende Enden des oder der Profilstreifen in Umfangsrichtung einander überlappend ausgebildet sind.

11. Nockenwelle nach einem der Ansprüche 1 - 6, **dadurch gekennzeichnet, dass** die die die Kipphebel-Ablaufflächen bildenden oder umfassenden Teile der Nocken einstückig sind und die Welle vorzugsweise vollumfänglich bündig umschliessen.

12. Nockenwelle nach einem der Ansprüche 1 - 11, **dadurch gekennzeichnet, dass** in mindestens einem der von der Schweissung betroffenen Bereiche in dem oder den Teilen aus dem zweiten niedergekohlten Stahl angrenzend an die Welle einen Fussring vorgesehen und die Schweissung durch diesen Fussring hindurch ausgeführt ist.

13. Nockenwelle nach einem der Ansprüche 1 - 12, **dadurch gekennzeichnet, dass** der für die Welle verwendete erste, niedergekohlte Stahl und/oder der für Nocken verwendete zweite niedergekohlte Stahl einen Kohlenstoffgehalt von weniger als 0.5 % aufweist.

14. Nockenwelle nach einem der Ansprüche 1 - 13, **dadurch** gekennzeichet, dass der für die Kipphebel-Ablauffläche der Nocken verwendete hochgekohlte Stahl einen Kohlenstoffgehalt von mehr als 0.5 %, insbesondere jedoch von mehr als 0.75 % aufweist.

15. Verfahren zur Herstellung einer Nockenwelle nach einem der Ansprüche 1 - 14, **dadurch gekennzeichnet, dass** die Nocken vor dem Fügen gehärtet sowie zusätzlich ggf. angelassen werden.

16. Verfahren zur Herstellung einer Nockenwelle nach einem der Ansprüche 1 - 14, **dadurch gekennzeichnet, dass** die Schweissung zur Befestigung der Nocken auf der Welle bei Umgebungstemperatur der miteinander zu verschweissenden Teile durchgeführt wird.

17. Verfahren zur Herstellung einer Nockenwelle nach einem der Ansprüche 1 - 14, **dadurch gekennzeichnet, dass** die Schweissung zur Befestigung der Nocken auf der Welle lasertechnisch erfolgt.

18. Verfahren nach Anspruch 15 zur Herstellung einer Nockenwelle nach einem der Ansprüche 1 - 14, **dadurch gekennzeichnet, dass** die Schweissung zur Befestigung der Nocken auf der Welle mit einer Schweissgeschwindigkeit von grösser als 2 m/s, inbesondere jedoch von grösser als 4 m/s, ausgeführt wird.

19. Verfahren zur Herstellung einer Nockenwelle nach einem der Ansprüche 1 - 14, **dadurch gekennzeichnet, dass** die Nocken vor ihrer Verschweissung mit der Welle auf der Welle **dadurch** vorfixiert werden, dass das ihre mit der Welle zu verschweissenden Elemente aus dem zweiten niedergekohlten Stahl mit der Welle verstemmt werden.

20. Nocken wie definiert in einem der Ansprüche 1 - 14.

## Claims

1. A built-up camshaft with a plurality of cams fastened on a shaft in each case by means of at least one weld, the shaft consisting of a first low-carbon steel, and a region of the cams having a hardened or hardenable rocker running surface consisting of a high-carbon steel, **characterized in that** the cams themselves are composed of two different materials, namely the high-carbon steel and a second low-carbon steel capable of being welded effectively to the steel of the shaft, wherein the second low-carbon steel is used in at least one region affected by the weld.

2. The camshaft as claimed in claim 1, **characterized in that** the different materials of the cams are connected to one another by soldering, plating, form fitting, nonpositively, by form fitting and friction, adhesive bonding, riveting and/or welding, in particular resistance pressure and/or friction welding.

3. The camshaft as claimed in one of claims 1 or 2, **characterized in that** the cams have a core which comprises the rocker running surface and consists of the high-carbon steel and which is arranged in the axial direction between at least two annular and/or ring-segment-shaped elements welded to the shaft and consisting of the second low-carbon steel.

4. The camshaft as claimed in one of claims 1 to 3, **characterized in that** the cams have an at least two-shell construction and have an outer shell comprising the rocker running surface and consisting of the high-carbon steel and at least one inner shell welded to the shaft and consisting of the second low-carbon steel.

5. The camshaft as claimed in one of claims 1 or 4, **characterized in that** the cams have a core which is welded to the shaft and consists of the second low-carbon steel and which is arranged in the axial direction between two annular elements comprising the rocker running surface and consisting of a high-carbon steel.

6. The camshaft as claimed in one of claims 1 - 5, **characterized in that** the part or parts of the cams consisting of the second low-carbon steel are welded to the shaft in a fully encircling manner.

7. The camshaft as claimed in one of claims 1 - 6, **characterized in that** those parts of the cams which form or comprise the rocker running surfaces are produced in each case from at least one bent profile strip, the profile strip or profile strips projecting in each case from the shaft preferably in the region of the cam tip.

8. The camshaft as claimed in claim 7, **characterized in that** mutually abutting ends of the profile strip or profile strips are welded to one another, in particular by resistance pressure welding.

9. The camshaft as claimed in claim 7, **characterized in that** mutually abutting ends of the profile strip or profile strips are connected to one another solely via that part or those parts of the cams which consist of the second low-carbon steel.

10. The camshaft as claimed in one of claims 7 - 9, **characterized in that** mutually abutting ends of the profile strip or profile strips are designed to overlap one another in the circumferential direction.

11. The camshaft as claimed in one of claims 1 - 6, **characterized in that** those parts of the cams which form or comprise the rocker running surfaces are in one piece and surround the shaft, flush, preferably over the entire circumference.

12. The camshaft as claimed in one of claims 1 - 11, **characterized in that** a foot ring is provided adjacently to the shaft in the part or parts consisting of the second low-carbon steel, in at least one of the regions affected by the weld, and the weld is executed through this foot ring.

13. The camshaft as claimed in one of claims 1 - 12, **characterized in that** the first low-carbon steel used for the shaft and/or the second low-carbon steel used for cams has a carbon content of lower than 0.5%.

14. The camshaft as claimed in one of claims 1 - 13, **characterized in that** the high-carbon steel used for the rocker running surface of the cams has a carbon content of more than 0.5%, but, in particular of more than 0.75%.

15. A method for producing a camshaft as claimed in one of claims 1 - 14, **characterized in that** the cams, before assembly are hardened and additionally, if appropriate, annealed.

16. A method for producing a camshaft as claimed in one of claims 1 - 14, **characterized in that** welding for fastening the cams on the shaft is carried out at the ambient temperature of the parts to be welded to one another.

17. A method for producing a camshaft as claimed in one of claims 1 - 14, **characterized in that** the welding for fastening the cams on the shaft takes place by laser.

18. The camshaft as claimed in claim 15, for producing a camshaft as claimed in one of claims 1 - 14, **characterized in that** welding for fastening the cams on the shaft is executed at a welding speed of higher than 2 m/s, but, in particular of higher than 4 m/s.

19. A method for producing a camshaft as claimed in one of claims 1 - 14, **characterized in that** the cams, before being welded to the shaft, are prefixed on the shaft **in that** their elements to be welded to the shaft and consisting of the second low-carbon steel are calked together with the shaft.

20. A cam as defined in one of claims 1 - 14.

## Revendications

1. Arbre à cames construit avec plusieurs cames fixées sur un arbre par respectivement au moins un soudage, l'arbre se composant d'un premier acier à faible teneur en carbone et une zone des cames comportant une surface d'écoulement à levier basculant durcie ou durcissable étant composée d'un acier à forte teneur en carbone, **caractérisé en ce que** les cames sont elles-mêmes composées de deux matériaux différents, notamment d'un acier à forte teneur en carbone et d'un deuxième acier à faible teneur en carbone pouvant facilement être soudé à l'acier de l'arbre, le deuxième acier à faible teneur en carbone étant utilisé dans au moins une zone concernée par le soudage.

2. Arbre à cames selon la revendication 1, **caractérisé en ce que** les différents matériaux des cames sont reliés entre eux par une technique de brasage, placage, complémentarité de formes, complémentarité de forces, complémentarité de formes et de forces, collage, rivetage, et/ou soudage, notamment au moyen d'une technique de résistance à la pression et/ou de soudage par frottement.

3. Arbre à cames selon l'une quelconque des revendications 1 ou 2, **caractérisé en ce que** les cames comportent un noyau comprenant la surface d'écoulement à levier basculant et se composant de l'acier à forte teneur en carbone, ledit noyau étant disposé dans la direction axiale entre au moins deux éléments de forme annulaire et/ou de forme de segment annulaire soudés à l'arbre et fabriqués à partir du deuxième acier à faible teneur en carbone.

4. Arbre à cames selon l'une quelconque des revendications 1 à 3, **caractérisé en ce que** les cames sont composées d'au moins deux coques et qu'une coque extérieure comportant la surface d'écoulement à levier basculant est en acier à forte teneur en carbone et qu'au moins une coque intérieure soudée à l'arbre est fabriquée à partir du deuxième acier à faible teneur en carbone.

5. Arbre à cames selon l'une quelconque des revendications 1 ou 4, **caractérisé en ce que** les cames comportent un noyau soudé à l'arbre fabriqué à partir du deuxième acier à faible teneur en carbone, ledit noyau étant disposé dans la direction axiale entre deux éléments de forme annulaire comprenant la surface d'écoulement à levier basculant et fabriqués en acier à forte teneur en carbone.

6. Arbre à cames selon l'une quelconque des revendications 1 à 5, **caractérisé en ce que** la ou les parties des cames fabriquées à partir du deuxième acier à faible teneur en carbone sont soudées à l'arbre sur l'ensemble de leur périphérie.

7. Arbre à cames selon l'une quelconque des revendications 1 à 6, **caractérisé en ce que** les parties des cames formant ou comprenant les surfaces d'écoulement à levier basculant sont respectivement fabriquées à partir d'au moins une bande de profilé coudée, la ou les bandes de profilé saillant de préférence respectivement hors de l'arbre dans la zone de la pointe de came.

8. Arbre à cames selon la revendication 7, **caractérisé en ce que** les extrémités butant les unes sur les autres de la ou des bandes de profilé sont soudées les unes aux autres, notamment au moyen d'une technique de soudage par résistance à la pression.

9. Arbre à cames selon la revendication 7, **caractérisé en ce que** les extrémités butant les unes sur les autres de la ou des bandes de profilé ne sont reliées entre elles que par les parties des cames fabriquées à partir du deuxième acier à faible teneur en carbone.

10. Arbre à cames selon l'une quelconque des revendications 7 à 9, **caractérisé en ce que** les extrémités butant les unes sur les autres de la ou des bandes de profilé sont réalisées de façon à se chevaucher dans la direction circonférentielle.

11. Arbre à cames selon l'une quelconque des revendications 1 à 6, **caractérisé en ce que** les parties de cames formant ou composant les surfaces d'écoulement à levier basculant sont réalisées d'un seul tenant et entourent l'arbre en affleurement de préférence sur l'ensemble de son périmètre.

12. Arbre à cames selon l'une quelconque des revendications 1 à 11, **caractérisé en ce qu'**un anneau de pied est prévu dans au moins une des zones concernées par le soudage, dans la ou les parties fabriquées à partir du deuxième acier à faible teneur en carbone connexe à l'arbre, et **en ce que** le soudage est réalisé à travers cet anneau de pied.

13. Arbre à cames selon l'une quelconque des revendications 1 à 12, **caractérisé en ce que** le premier acier à faible teneur en carbone utilisé pour l'arbre et/ou le deuxième acier à faible teneur en carbone utilisé pour les cames présente(nt) une teneur en carbone inférieure à 0,5 %.

14. Arbre à cames selon l'une quelconque des revendications 1 à 13, **caractérisé en ce que** l'acier à forte teneur en carbone utilisé pour la surface d'écoulement à levier basculant des cames présente une teneur en carbone supérieure à 0,5 %, notamment supérieure à 0,75 %.

15. Procédé de production d'un arbre à cames selon l'une quelconque des revendications 1 à 14, **caractérisé en ce que** les cames sont durcies et le cas échéant en outre chauffées avant l'assemblage.

16. Procédé de production d'un arbre à cames selon l'une quelconque des revendications 1 à 14, **caractérisé en ce que** le soudage destiné à fixer les cames sur l'arbre est réalisé à température ambiante des parties à souder entre elles.

17. Procédé de production d'un arbre à cames selon l'une quelconque des revendications 1 à 14, **caractérisé en ce que** le soudage est réalisé avec une technique par laser pour fixer les cames sur l'arbre.

18. Procédé selon la revendication 15 de production d'un arbre à cames selon l'une quelconque des revendications 1 à 14, **caractérisé en ce que** le soudage servant à fixer les cames sur l'arbre est réalisé à une vitesse de soudage supérieure à 2 m/s, notamment supérieure à 4 m/s.

19. Procédé de production d'un arbre à cames selon l'une quelconque des revendications 1 à 14, **caractérisé en ce que** les cames sont préfixées sur l'arbre avant leur soudage à l'arbre **en ce que** leurs éléments à souder à l'arbre sont matés à l'arbre à partir du deuxième acier à faible teneur en carbone.

20. Cames selon l'une quelconque des revendications 1 à 14.
